# EUROPEAN PATENT APPLICATION

(11) **EP 3 434 435 A1**
(43) Date of publication of application: **30.01.2019**
(21) Application number: 17770199.2
(22) Date of filing: 21.03.2017
(51) Int. Cl.: B29B 11/16, B29B 15/08, B29K 101/10

(54) **FIBER-REINFORCED RESIN MATERIAL AND MANUFACTURING METHOD THEREFOR**

(30) Priority: 24.03.2016 JP 2016059810
(71) Applicant: Mitsubishi Chemical Corporation, Tokyo 100-8251 (JP)
(72) Inventor: MAEDA Akihiro, Tokyo 100-8251 (JP); CHEN Yuan, Tokyo 100-8251 (JP)
(74) Representative: Ter Meer Steinmeister & Partner
(86) International application number: PCT/JP2017/011165
(87) International publication number: WO 2017/164157

(57) **Abstract**

A fiber-reinforced resin material (1) in which: a matrix resin composition (S) is impregnated in a sheet-shaped fiber bundle group (F) formed from multiple fiber bundles (f); of the fiber bundles (f) in a specific area (A) in a cross-section along the planar direction, the proportion Q1 of fiber bundles (f) with a fiber axis direction of greater than -90° to -45°, the proportion Q2 of fiber bundles (f) of greater than -45° to 0°, the proportion Q3 of fiber bundles (f) of greater than 0° to 45° and the proportion Q4 of fiber bundles (f) of greater than 45° to 90° are all at least 15%; and of the fiber bundles (f) in a specific area (B) in a cross-section along the thickness direction, the proportion Q5 of fiber bundles (f) with a fiber axis direction of -10° to 10° is not more than 97%.

## Description

### TECHNICAL FIELD

The present invention relates to a fiber-reinforced resin material and a manufacturing method therefor.

This application is based upon and claims the benefit of priority from Japanese Patent Application No. 2016-059810 filed on March 24, 2016 in the Japanese Patent Office, the entire contents of which are hereby incorporated by reference.

### BACKGROUND ART

As an intermediate material of a fiber-reinforced resin material molded body having parts having partially different thicknesses, ribs, bosses, or the like, a sheet molding compound (SMC) having a property to easily flow at the time of molding by a mold is widely used. The SMC is a fiber-reinforced resin material obtained, for example, by impregnating a thermosetting resin such as an unsaturated polyester resin in a sheet-shaped fiber bundle group formed from a plurality of chopped fiber bundles obtained by cutting an elongated reinforced fiber such as a glass fiber or a carbon fiber into a predetermined length.

Examples of a fiber-reinforced resin material molded body obtained by molding the SMC include the following:
(i) a fiber-reinforced resin material which contains chopped fiber bundles, which include 10,000 to 700,000 reinforced fibers having a fiber length of 5 to 100 mm, and a matrix resin composition and in which a ratio (Wm/tm) of an average width Wm to an average thickness tm of the chopped fiber bundles is 70 to 1,000, the average width Wm is 2 to 50 mm, and the average thickness tm is 0.01 to 0.1 mm (Patent Literature 1); and
(ii) a fiber-reinforced resin material which contains chopped fiber bundles, which include 10,000 to 1,000,000 reinforced fibers having a fiber length of 5 to 100 mm and a ratio (W/t) of a width W to a thickness t is 10 to 1,000, and a matrix resin composition (Patent Literature 2).

### CITATION LIST

### PATENT LITERATURE

Patent Literature 1: JP 2009-62474 A
Patent Literature 2: JP 2009-114611 A

### SUMMARY OF THE INVENTION

### PROBLEM TO BE SOLVED BY THE INVENTION

However, the fiber-reinforced resin material molded body obtained by the conventional fiber-reinforced resin material as in Patent Literatures 1 and 2 has not sufficient mechanical properties such as tensile strength and tensile elastic modulus yet. For this reason, it is important to obtain a fiber-reinforced resin material by which a fiber-reinforced resin material molded body having a higher tensile strength, a higher tensile elastic modulus, or the like can be manufactured.

An object of the invention is to provide a fiber-reinforced resin material and a method for manufacturing a fiber-reinforced resin material by which a fiber-reinforced resin material molded body having high mechanical properties such as tensile strength and tensile elastic modulus is obtained.

### MEANS FOR SOLVING PROBLEM

The invention provides a fiber-reinforced resin material and a method for manufacturing a fiber-reinforced resin material which have the following configuration.
[1] A fiber-reinforced resin material in which a matrix resin composition is impregnated in a sheet-shaped fiber bundle group formed from a plurality of fiber bundles,
   in which when a transverse direction is designated as 0° and a counterclockwise direction is designated as positive in a 25 mm long × 125 mm wide rectangular range (A) in a cross-section along a planar direction, the following proportions Q₁ to Q₄ are all 15% or more, and
   when a planar direction is designated as 0° and a counterclockwise direction is designated as positive in a 2 mm long × 125 mm wide rectangular range (B) in a cross-section along a thickness direction, the following proportion Q₅ is 97% or less.
   Proportion Q₁: a proportion of the number of fiber bundles with a fiber axis direction of more than -90° and -45° or less with respect to the total number of fiber bundles in the range (A)
   Proportion Q₂: a proportion of the number of fiber bundles with a fiber axis direction of more than -45° and 0° or less with respect to the total number of fiber bundles in the range (A)
   Proportion Q₃: a proportion of the number of fiber bundles with a fiber axis direction of more than 0° and 45° or less with respect to the total number of fiber bundles in the range (A)
   Proportion Q₄: a proportion of the number of fiber bundles with a fiber axis direction of more than 45° and 90° or less with respect to the total number of fiber bundles in the range (A)
   Proportion Q₅: a proportion of the number of fiber bundles with a fiber axis direction of -10° or more and 10° or less with respect to the total number of fiber bundles in the range (B)
[2] The fiber-reinforced resin material described in [1], in which the proportion Q₅ is a proportion of the number of fiber bundles with a fiber axis direction of -5° or more and 5° or less with respect to the total number of fiber bundles in the range (B).
[3] The fiber-reinforced resin material described in [1] or [2], in which the proportion Q₅ is 95% or less.
[4] The fiber-reinforced resin material described in any one of [1] to [3], in which a ratio L2/L1 of an average fiber length L2 to an average width L1 of the fiber bundles is 5 to 20.
[5] The fiber-reinforced resin material described in any one of [1] to [4], in which the number of the fiber bundles laminated per unit thickness is 8 or more.
[6] The fiber-reinforced resin material described in any one of [1] to [5], in which a fiber mass content is 60% by mass or more.
[7] A method for manufacturing a fiber-reinforced resin material, the method including an impregnating step of sandwiching a sheet-shaped fiber bundle group formed from a plurality of fiber bundles with a pair of resin sheets formed from a matrix resin composition and impregnating the matrix resin composition in the sheet-shaped fiber bundle group while pressurizing the sheet-shaped fiber bundle group and the pair of resin sheets from both surface sides to obtain a fiber-reinforced resin material,
   in which the fiber bundles have an average width L'1 of 2 to 12 mm, an average fiber length L'2 of 20 to 100 mm, an average thickness L'3 of 0.01 to 0.1 mm, and a ratio L'2/L'1 of 5 to 20.

### EFFECT OF THE INVENTION

By using the fiber-reinforced resin material of the invention, a fiber-reinforced resin material molded body having high mechanical properties such as tensile strength and tensile elastic modulus is obtained.

According to the method for manufacturing a fiber-reinforced resin material of the invention, it is possible to manufacture a fiber-reinforced resin material by which a fiber-reinforced resin material molded body having high mechanical properties such as tensile strength and tensile elastic modulus is obtained.

### BRIEF DESCRIPTION OF DRAWINGS

Fig. 1 is a perspective view illustrating an example of a fiber-reinforced resin material of the invention;
Fig. 2 is a cross-sectional view obtained by cutting the fiber-reinforced resin material of Fig. 1 in a planar direction;
Fig. 3 is a cross-sectional view obtained by cutting the fiber-reinforced resin material of Fig. 1 in a thickness direction;
Fig. 4 is a perspective view illustrating a fiber bundle in the fiber-reinforced resin material of Fig. 1; and
Fig. 5 is a schematic configuration diagram illustrating an example of a manufacturing apparatus used in a method for manufacturing a fiber-reinforced resin material laminated body of the invention.

### MODE(S) FOR CARRYING OUT THE INVENTION

### [Fiber-Reinforced Resin Material]

A fiber-reinforced resin material of the invention is a fiber-reinforced resin material in which a matrix resin composition is impregnated in a sheet-shaped fiber bundle group formed from a plurality of fiber bundles (SMC). Hereinafter, description will be made using an example of the fiber-reinforced resin material of the invention.

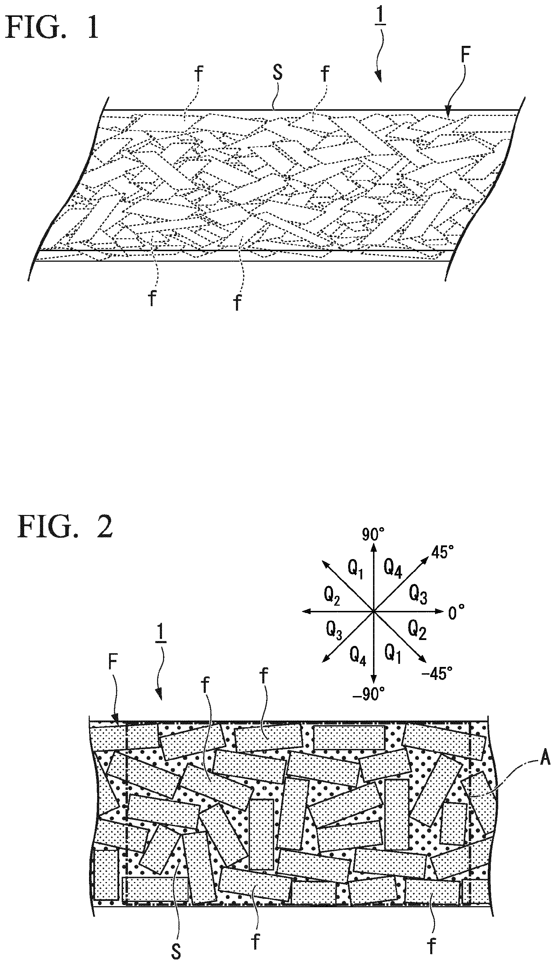

A fiber-reinforced resin material 1 of the present embodiment is formed by impregnating a matrix resin composition S in an elongated sheet-shaped fiber bundle group F formed from a plurality of fiber bundles f, as illustrated in Fig. 1. The fiber bundles f are obtained by bundling a plurality of reinforced fibers.

### (Proportions Q₁ to Q₄)

As illustrated in Fig. 2, a transverse direction is designated as 0° and a counterclockwise direction is designated as positive in a 25 mm long × 125 mm wide rectangular range (A) in a cross-section along a planar direction of the fiber-reinforced resin material 1. At this time, in the fiber-reinforced resin material 1, the following proportions Q₁ to Q₄ are all 15% or more.
Proportion Q₁: a proportion of the number of fiber bundles f with a fiber axis direction of more than -90° and -45° or less with respect to the total number of fiber bundles f in the range (A)
Proportion Q₂: a proportion of the number of fiber bundles with a fiber axis direction of more than -45° and 0° or less with respect to the total number of fiber bundles f in the range (A)
Proportion Q₃: a proportion of the number of fiber bundles with a fiber axis direction of more than 0° and 45° or less with respect to the total number of fiber bundles f in the range (A)
Proportion Q₄: a proportion of the number of fiber bundles with a fiber axis direction of more than 45° and 90° or less with respect to the total number of fiber bundles f in the range (A)

Incidentally, the total of the proportions Q₁ to Q₄ is 100%.

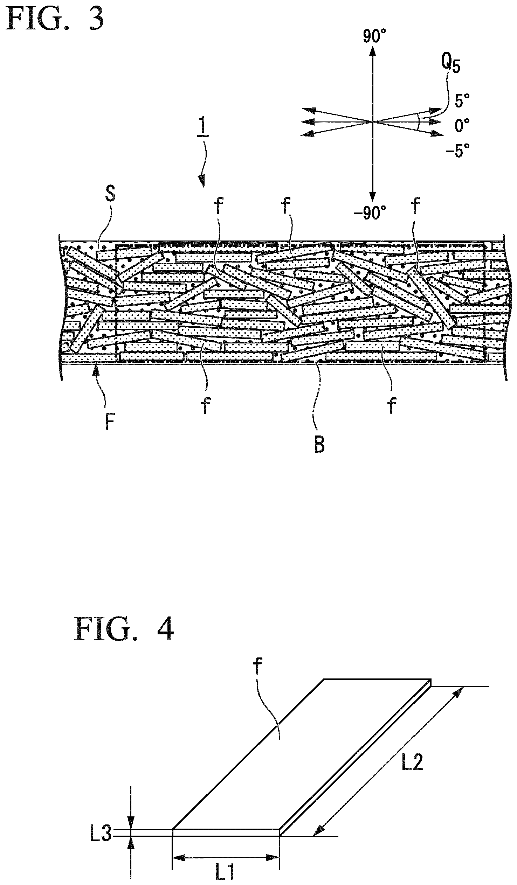

For example, in a parallelogram of Fig. 4 illustrating the fiber bundle, when any one point in an arbitrary short side is designated as N1 and a point other than N1 in a long side direction including N1 is designated as N2, a straight line connecting N1 and N2 corresponds to a fiber axis of the fiber bundle. That is, the fiber axis direction in this fiber bundle is decided by connecting N1 and N2 by the straight line in a case where a lower right corner of the parallelogram is designated as N1 and an upper right corner thereof is designated as N2.

The number of fiber bundles can be counted, for example, from an X-ray CT image of the fiber-reinforced resin material, and counting can be carried out by performing thermolysis to a resin component of the fiber-reinforced resin material under a nitrogen atmosphere or dissolving and removing the resin component.

In this way, in the fiber-reinforced resin material 1, the respective fiber bundles f are scattered in the planar direction such that the fiber axis directions thereof are not biased to a specific direction. According to this, the tensile elastic modulus of a fiber-reinforced resin material molded body obtained by molding the fiber-reinforced resin material 1 increases. Each of the proportions Q₁ to Q₄ is preferably 15 to 35% and more preferably 20 to 30% from the viewpoint of easily obtaining a fiber-reinforced resin material molded body having a high tensile elastic modulus.

In addition, from the viewpoint of easily obtaining a fiber-reinforced resin material molded body having a high tensile elastic modulus, it is preferable that there is no difference among the proportions Q₁ to Q₄ as much as possible. Specifically, a difference between the highest proportion and the lowest proportion in the proportions Q₁ to Q₄ is preferably 20% or less and more preferably 10% or less. Specifically, the difference is preferably more than 0 to 20% or less and more preferably more than 0 to 10% or less.

### (Proportion Q₅)

As illustrated in Fig. 3, a planar direction is designated as 0° and a counterclockwise direction is designated as positive in a 2 mm long × 125 mm wide rectangular range (B) in a cross-section along a thickness direction of the fiber-reinforced resin material 1. At this time, in the fiber-reinforced resin material 1, the following proportion Q₅ is 97% or less.
Proportion Q₅: a proportion of the number of fiber bundles with a fiber axis direction of -10° or more and 10° or less with respect to the total number of fiber bundles in the range (B)

In the fiber-reinforced resin material 1, the proportion of the fiber bundles f present in a state of being in almost parallel to the planar direction, that is, having an inclination of -10° or more and 10° or less is 97% or less. That is, the fiber bundles f having a proportion of 3% or more in the range (B) are present to have an inclination of more than 10° in terms of an absolute value with respect to the planar direction. According to this, entanglement between the respective fiber bundles increases so that a tensile strength of a fiber-reinforced resin material molded body obtained by molding the fiber-reinforced resin material 1 increases.

Since the fiber bundles as a target of the proportion Q₅ tend to obtain a fiber-reinforced resin material molded body having a higher tensile strength, the fiber bundles are preferably fiber bundles with a fiber axis direction of -5° or more and 5° or less with respect to the total number of the fiber bundles in the range (B).

In addition, the proportion Q₅ is set to be preferably in a range of 90 to 97%, more preferably in a range of 90 to 95%, and further preferably in a range of 90 to 93% since a fiber-reinforced resin material molded body having a further higher tensile strength tends to be obtained.

The aforementioned scattering state in the fiber bundles constituting the fiber-reinforced resin material of the invention can be confirmed, for example, by analyzing an X-ray CT three-dimensional image of the material.

### (Fiber Bundle)

The reinforced fibers forming the fiber bundles are not particularly limited, and for example, inorganic fibers, organic fibers, metallic fibers, and reinforced fibers having a hybrid configuration obtained by combining those fibers can be used.

Examples of the inorganic fibers include carbon fibers, graphite fibers, silicon carbide fibers, alumina fibers, tungsten carbide fibers, boron fibers, and glass fibers. Examples of the organic fibers include aramid fibers, high-density polyethylene fibers, other general nylon fibers, and polyester fibers. Examples of the metallic fibers include fibers of stainless steel, iron, and the like, and carbon fibers coated with a metal may also be used. Among these, carbon fibers are preferable in consideration of mechanical properties such as strength of a fiber-reinforced resin material molded body.

The reinforced fibers may be used singly or in combination of two or more kinds thereof.

An average width L1 (Fig. 4) of the fiber bundles is preferably 2 to 12 mm, more preferably 2 to 10 mm, further preferably 3 to 8 mm, and particularly preferably 3 to 6 mm. When the average width L1 of the fiber bundles is equal to or more than the lower limit, the fiber-reinforced resin material more easily flows at the time of molding, and thus molding becomes easier. When the average width L1 of the fiber bundles is equal to or less than the upper limit, a fiber-reinforced resin material molded body excellent in mechanical properties such as tensile strength and tensile elastic modulus is easily obtained.

Incidentally, the average width L1 of the fiber bundles is measured by the following method. The fiber-reinforced resin material is heated by an electric furnace or the like to decompose the matrix resin composition, and ten fiber bundles are randomly selected from remaining fiber bundles. Regarding each of ten fiber bundles, widths at three places, that is, both end portions and a central portion in the fiber axis direction, are measured by a caliper, and all of these measured values are averaged and designated as an average width.

An average fiber length L2 (Fig. 4) of the fiber bundles is preferably 20 to 100 mm, more preferably 25 to 80 mm, and further preferably 25 to 55 mm. When the average fiber length L2 of the fiber bundles is equal to or more than the lower limit, a fiber-reinforced resin material molded body excellent in mechanical properties such as tensile strength and tensile elastic modulus is easily obtained. When the average fiber length L2 of the fiber bundles is equal to or less than the upper limit, the fiber-reinforced resin material more easily flows at the time of molding, and thus molding becomes easier.

Incidentally, the average fiber length L2 of the fiber bundles is measured by the following method. The maximum fiber length of each of ten fiber bundles obtained similarly to the measurement of the average width is measured by a caliper, and all of these measured values are averaged and designated as an average fiber length.

A ratio L2/L1 of the average fiber length L2 to the average width L1 in the fiber bundles is preferably 5 to 20, more preferably 5 to 10, and further preferably 7 to 9. When the ratio L2/L1 is within the above ranges, a fiber-reinforced resin material molded body excellent in mechanical properties such as tensile strength and tensile elastic modulus is easily obtained.

An average thickness L3 (Fig, 4) of the fiber bundles is preferably 0.01 to 0.1 mm, more preferably 0.02 to 0.1 mm, further preferably 0.02 to 0.08 mm, and particularly preferably 0.04 to 0.06 mm. When the average thickness L3 of the fiber bundles is equal to or more than the lower limit, the fiber bundles are easily handled, and further, it becomes easier to impregnate the matrix resin composition in the fiber bundle group. When the average thickness L3 of the fiber bundles is equal to or less than the upper limit, a fiber-reinforced resin material molded body excellent in mechanical properties such as tensile strength and tensile elastic modulus is easily obtained.

Incidentally, the average thickness of the fiber bundles is measured by the following method. Regarding each of ten fiber bundles obtained similarly to the measurement of the average width, thicknesses at three places, that is, both end portions and a central portion in the fiber axis direction, are measured by a caliper, and all of these measured values are averaged and designated as an average thickness.

A ratio L1/L3 of the average width L1 to the average thickness L3 in the fiber bundles is preferably 10 to 500, more preferably 50 to 400, and further preferably 100 to 300. When the ratio L1/L3 is within the above ranges, a fiber-reinforced resin material molded body excellent in mechanical properties such as tensile strength and tensile elastic modulus is easily obtained.

The number of the fiber bundles laminated per unit thickness (per thickness 1 mm) in the fiber-reinforced resin material is preferably 8 or more, more preferably 8 to 16, and further preferably 8 to 12. When the number of the fiber bundles laminated is equal to or more than the lower limit, a fiber-reinforced resin material molded body excellent in mechanical properties such as tensile strength and tensile elastic modulus is easily obtained. When the number of the fiber bundles laminated is equal to or less than the upper limit, the fiber-reinforced resin material more easily flows at the time of molding, and thus molding becomes easier.

The term "laminated" described herein means that at least a part of arbitrary fiber bundles constituting the fiber-reinforced resin material (1% or more of projection area of the fiber bundle) is in a state of overlapping other fiber bundle regardless of presence of contact when the fiber-reinforced resin material is projected in the thickness direction.

Incidentally, the number of the fiber bundles laminated can be counted, for example, from an X-ray CT image of the fiber-reinforced resin material, and counting can be carried out by performing thermolysis to a resin component of the fiber-reinforced resin material under a nitrogen atmosphere or dissolving and removing the resin component.

A fiber mass content of the fiber-reinforced resin material of the invention is preferably 60% by mass or more, more preferably 60 to 80% by mass, and further preferably 60 to 70% by mass, with respect to the total mass of the fiber-reinforced resin material. When the fiber mass content is equal to or more than the lower limit, a fiber-reinforced resin material molded body excellent in mechanical properties such as tensile strength and tensile elastic modulus is easily obtained. When the fiber mass content is equal to or less than the upper limit, the fiber-reinforced resin material more easily flows at the time of molding, and thus molding becomes easier.

### (Matrix Resin Composition)

As the matrix resin composition, a composition containing a thermosetting resin is preferable.

The thermosetting resin is not particularly limited, and examples thereof include an epoxy resin, a phenol resin, an unsaturated polyester resin, a urethane resin, a urea resin, a melamine resin, and an imide resin. The thermosetting resin may be used singly or in combination of two or more kinds thereof.

An additive such as a curing agent, an internal release agent, a thickener, or a stabilizing agent may be blended in the matrix resin composition as necessary.

In the fiber-reinforced resin material of the invention described above, the proportions Q₁ to Q₄ are all controlled to 15% or more and the proportion Q₅ is controlled to 97% or less. In this way, in the fiber-reinforced resin material of the invention, the fiber bundles are scattered such that the fiber axis direction becomes further approximately random in the cross-section along the planar direction; meanwhile, the fiber bundles having a large inclination of the fiber axis direction with respect to the planar direction are controlled to increase in the cross-section along the thickness direction. By controlling the orientation state of the fiber bundles in the fiber-reinforced resin material in this way, a fiber-reinforced resin material molded body obtained by molding the fiber-reinforced resin material has excellent mechanical properties such as tensile strength and tensile elastic modulus.

Incidentally, the fiber-reinforced resin material of the invention is not limited to the above-described fiber-reinforced resin material 1. For example, the fiber-reinforced resin material of the invention may not be elongated.

### [Method for Manufacturing Fiber-Reinforced Resin Material]

A method for manufacturing a fiber-reinforced resin material of the invention is a method for manufacturing the aforementioned fiber-reinforced resin material. The orientations of fiber bundles in the planar direction and the thickness direction in the fiber-reinforced resin material can be controlled by adjusting the fiber length, the width, and the thickness of the fiber bundle. Specifically, as the fiber bundles forming the sheet-shaped fiber bundle group in an impregnating step described below, fiber bundles in which the average width L'1 is 2 to 12 mm, the average fiber length L'2 is 20 to 100 mm, the average thickness L'3 is 0.01 to 0.1 mm, and the ratio L'2/L'1 is 5 to 20 are used.

Impregnating step: a step of sandwiching a sheet-shaped fiber bundle group formed from a plurality of fiber bundles with a pair of resin sheets formed from a matrix resin composition and impregnating the matrix resin composition in the sheet-shaped fiber bundle group while pressurizing the sheet-shaped fiber bundle group and the pair of resin sheets from both surface sides to obtain a fiber-reinforced resin material

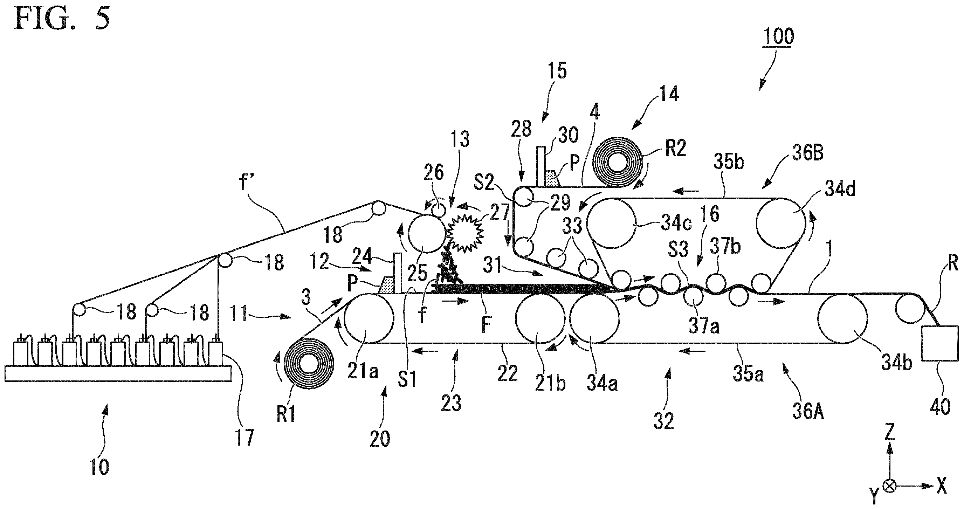

Hereinafter, a case where a manufacturing apparatus 100 exemplified in Fig. 5 is used will be described as an example of the method for manufacturing a fiber-reinforced resin material laminated body of the invention. In the following description, an XYZ rectangular coordinate system is set, and a positional relationship of each member will be described with reference to the XYZ rectangular coordinate system as necessary.

### (Manufacturing Apparatus)

The manufacturing apparatus 100 includes a fiber bundle supply section 10, a first carrier sheet supply section 11, a first conveying section 20, a first coating section 12, a cutter 13, a second carrier sheet supply section 14, a second conveying section 28, a second coating section 15, an impregnating section 16, and a storage container 40.

The first carrier sheet supply section 11 supplies an elongated first carrier sheet 3 drawn out from a first raw fabric roll R1 to the first conveying section 20. The first conveying section 20 includes a conveyor 23 on which an endless belt 22 is hung between a pair of pulleys 21a and 21b. The conveyor 23 revolves the endless belt 22 by rotating the pair of pulleys 21a and 21b in the same direction and conveys the first carrier sheet 3 to the right side in an X axis direction on the surface of the endless belt 22.

The first coating section 12 is located immediately above the pulley 21a side of the first conveying section 20 and includes a coater 24 that supplies a paste P formed from a matrix resin composition. The paste P is coated in a predetermined thickness on the surface of the first carrier sheet 3 by the first carrier sheet 3 passing through the coater 24 to form a first resin sheet S1. The first resin sheet S1 runs with the conveyance of the first carrier sheet 3.

The fiber bundle supply section 10 supplies an elongated fiber bundle f to the cutter 13 through a plurality of guide rolls 18 while drawing the fiber bundle f out from a plurality of bobbins 17. The cutter 13 is located above the first carrier sheet 3 at the subsequent stage in the conveying direction in relation to the first coating section 12. The cutter 13 continuously cuts the fiber bundle f supplied from the fiber bundle supply section 10 into a predetermined length and includes a guide roll 25, a pinch roll 26, and a cutter roll 27. The guide roll 25 guides the supplied fiber bundle f downward while rotating. The pinch roll 26 rotates in the direction opposite to the guide roll 25 while interposing the fiber bundle f with the guide roll 25. According to this, the fiber bundle f is drawn out from the plurality of bobbins 17. The cutter roll 27 cuts the fiber bundle f while rotating to have a predetermined length. The fiber bundles f cut into a predetermined length by the cutter 13 are dropped and scattered on the first resin sheet S1 to form the sheet-shaped fiber bundle group F.

The second carrier sheet supply section 14 supplies an elongated second carrier sheet 4 drawn out from a second raw fabric roll R2 to the second conveying section 28. The second conveying section 28 is located above the first carrier sheet 3 conveyed by the conveyor 23 and includes a plurality of guide rolls 29. The second conveying section 28 conveys the second carrier sheet 4 supplied from the second carrier sheet supply section 14 in a direction (left side in the X axis direction) opposite to the first carrier sheet 3, and then reverses the conveying direction to the same direction as the first carrier sheet 3 by the plurality of guide rolls 29.

The second coating section 15 is located immediately above the second carrier sheet 4 conveyed in a direction opposite to the first carrier sheet 3 and includes a coater 30 that supplies the paste P formed from a matrix resin composition. The paste P is coated in a predetermined thickness on the surface of the second carrier sheet 4 by the second carrier sheet 4 passing through the coater 30 to form a second resin sheet S2. The second resin sheet S2 runs with the conveyance of the second carrier sheet 4.

The impregnating section 16 is located at the subsequent stage in the first conveying section 20 in relation to the cutter 13 and includes a bonding mechanism 31 and a pressing mechanism 32. The bonding mechanism 31 is located above the pulley 21b of the conveyor 23 and includes a plurality of bonding rolls 33. The plurality of bonding rolls 33 are arranged side by side in the conveying direction in a state of being in contact with the back surface of the second carrier sheet 4 having the second resin sheet S2 formed thereon. In addition, the plurality of bonding rolls 33 are arranged such that the second carrier sheet 4 gradually approaches the first carrier sheet 3.

In the bonding mechanism 31, the first carrier sheet 3 and the second carrier sheet 4 are conveyed while being superimposed in a state where the first resin sheet S1, the sheet-shaped fiber bundle group F, and the second resin sheet S2 are interposed therebetween. Herein, the first carrier sheet 3 and the second carrier sheet 4 bonded together in a state where the first resin sheet S1, the sheet-shaped fiber bundle group F, and the second resin sheet S2 are interposed are referred to as a laminate precursor S3.

The pressing mechanism 32 is located at the subsequent stage of the bonding mechanism 31 and includes a lower conveyor 36A on which an endless belt 35a is hung between a pair of pulleys 34a and 34b and an upper conveyor 36B on which an endless belt 35b is hung between a pair of pulleys 34c and 34d. The lower conveyor 36A and the upper conveyor 36B are arranged to face each other in a state where the endless belts 35a and 35b abut each other.

The pressing mechanism 32 revolves the endless belt 35a by rotating the pair of pulleys 34a and 34b of the lower conveyor 36A in the same direction. In addition, in the pressing mechanism 32, by rotating the pair of pulleys 34c and 34d of the upper conveyor 36B in the same direction, the endless belt 35b is revolved in the opposite direction at the same speed as the endless belt 35a. According to this, the laminate precursor S3 interposed between the endless belts 35a and 35b is conveyed to the right side in the X axis direction.

The pressing mechanism 32 is further provided with a plurality of lower rolls 37a and a plurality of upper rolls 37b. The plurality of lower rolls 37a are arranged side by side in the conveying direction in a state of being in contact with the back surface of the abutting portion of the endless belt 35a. Similarly, the plurality of upper rolls 37b are arranged side by side in the conveying direction in a state of being in contact with the back surface of the abutting portion of the endless belt 35b. In addition, the plurality of lower rolls 37a and the plurality of upper rolls 37b are alternately arranged side by side in the conveying direction of the laminate precursor S3.

In the pressing mechanism 32, while the laminate precursor S3 passes between the endless belts 35a and 35b, the laminate precursor S3 is pressurized by the plurality of lower rolls 37a and the plurality of upper rolls 37b. At this time, the matrix resin compositions of the first resin sheet S1 and the second resin sheet S2 are impregnated in the sheet-shaped fiber bundle group F to form the fiber-reinforced resin material 1 (SMC) in a state of being interposed with the first carrier sheet 3 and the second carrier sheet 4.

The storage container 40 is a container for storing a raw fabric R in which the fiber-reinforced resin material 1 is sandwiched with the first carrier sheet 3 and the second carrier sheet 4.

### (Manufacturing Method)

In the method for manufacturing a fiber-reinforced resin material laminated body using the manufacturing apparatus 100, for example, the following scattering step and impregnating step are sequentially performed.

Scattering step: a step of continuously cutting an elongated fiber bundle f' and scattering a plurality of cut fiber bundles f in a sheet shape on a first resin sheet S1 to form a sheet-shaped fiber bundle group F

Impregnating step: a step of laminating a second resin sheet S2 on the sheet-shaped fiber bundle group F to form a laminate precursor S3, pressurizing the laminate precursor S3 from both surface sides, and impregnating a matrix resin composition in the sheet-shaped fiber bundle group F to obtain a fiber-reinforced resin material 1

### <Scattering Step>

The elongated first carrier sheet 3 is drawn out from the first raw fabric roll R1 and supplied to the first conveying section 20 by the first carrier sheet supply section 11, and the paste P is coated in a predetermined thickness by the first coating section 12 to form the first resin sheet S1. The first resin sheet S1 on the first carrier sheet 3 is caused to run by conveying the first carrier sheet 3 by the first conveying section 20.

The fiber bundle f supplied from the fiber bundle supply section 10 is continuously cut by the cutter 13 to have a predetermined length, and the cut fiber bundles f are dropped and scattered on the first resin sheet S1. According to this, the sheet-shaped fiber bundle group F on which the respective fiber bundles f are scattered in random fiber orientations is continuously formed on the running first resin sheet S1.

In the scattering step, for example, the elongated fiber bundle f having a width of 2 to 10 mm and a thickness of 0.02 to 0.11 mm is supplied to the cutter 13. Then, the fiber bundle f is cut to have an average fiber length L2 of 20 to 100 mm. According to this, the cut fiber bundles f (chopped fiber bundles) become fiber bundles in which the average width L'1 is 2 to 10 mm, the average fiber length L'2 is 20 to 100 mm, the average thickness L'3 is 0.02 to 0.1 mm, and the ratio L'2/L'1 is 5 to 20.

Incidentally, the scattering step is not limited to the above-described method as long as each dimension of the cut fiber bundle is adjusted within the above ranges. For example, in the case of performing opening of widening the fiber bundle in the width direction, separating of dividing the fiber bundle in the width direction, and the like before cutting, a method using fiber bundles with different dimensions from those in the above-described method may be employed.

An average width L'1 of the fiber bundles forming the sheet-shaped fiber bundle group is preferably 2 to 12 mm, more preferably 2 to 10 mm, further preferably 3 to 8 mm, and particularly preferably 3 to 6 mm, from the viewpoint of easily controlling the proportions Q₁ to Q₅ within the above-described ranges.

An average fiber length L'2 of the fiber bundles forming the sheet-shaped fiber bundle group is preferably 20 to 100 mm, more preferably 25 to 80 mm, and further preferably 25 to 55 mm, from the same reason.

An average thickness L'3 of the fiber bundles forming the sheet-shaped fiber bundle group is preferably 0.01 to 0.1 mm, more preferably 0.02 to 0.1 mm, further preferably 0.02 to 0.08 mm, and particularly preferably 0.04 to 0.06 mm, from the same reason.

A ratio L'2/L'1 is preferably 5 to 20, more preferably 5 to 10, and further preferably 7 to 9, from the same reason.

A ratio L'1/L'3 is preferably 10 to 500, more preferably 50 to 400, further preferably 100 to 300, and particularly preferably 100 to 200, from the same reason.

### <Impregnating Step>

The elongated second carrier sheet 4 is drawn out from the second raw fabric roll R2 and supplied to the second conveying section 28 by the second carrier sheet supply section 14. The paste P is coated in a predetermined thickness on the surface of the second carrier sheet 4 by the second coating section 15 to form the second resin sheet S2.

The second resin sheet S2 is caused to run by conveying the second carrier sheet 4, and the second resin sheet S2 is bonded and laminated together with the second carrier sheet 4 on the sheet-shaped fiber bundle group F by the bonding mechanism 31. According to this, a material precursor obtained by interposing the sheet-shaped fiber bundle group F with the first resin sheet S1 and the second resin sheet S2 is continuously formed as the laminate precursor S3 interposed with the first carrier sheet 3 and the second carrier sheet 4.

The laminate precursor S3 is pressurized from both surfaces by the pressing mechanism 32, the matrix resin compositions of the first resin sheet S1 and the second resin sheet S2 are impregnated in the sheet-shaped fiber bundle group F, and thus the fiber-reinforced resin material 1 is formed between the first carrier sheet 3 and the second carrier sheet 4. By forming the sheet-shaped fiber bundle group using fiber bundles in which each of the average width L'1, the average fiber length L'2, the average thickness L'3, and the ratio L'2/L'1 is controlled and pressurizing the fiber bundle group from both surface sides to perform impregnating, a fiber-reinforced resin material in which the orientation state of the fiber bundles satisfies each condition of the proportions Q₁ to Q₅ is formed.

The raw fabric R in a state where the fiber-reinforced resin material 1 is sandwiched with the first carrier sheet 3 and the second carrier sheet 4 is transferred and stored into the storage container 40.

According to the method for manufacturing a fiber-reinforced resin material of the invention described above, a fiber-reinforced resin material in which the proportions Q₁ to Q₄ are all 15% or more and the proportion Q₅ is 97% or less is obtained. Therefore, a fiber-reinforced resin material molded body obtained by molding the fiber-reinforced resin material has excellent mechanical properties such as tensile strength and tensile elastic modulus.

Incidentally, the method for manufacturing a fiber-reinforced resin material of the invention is not limited to the method for continuously manufacturing an elongated fiber-reinforced resin material as described above, and may be a method for manufacturing a sheet-shaped fiber-reinforced resin material.

### EXAMPLES

Hereinafter, the invention will be described in detail by Examples; however, the invention is not limited to the following description.

### [Example 1]

Simulation was carried out using LS-DYNA (manufactured by Livermore Software Technology Corporation (LSTC)) as simulation software.

In the simulation, fiber bundles formed from 15,000 carbon fibers and having a width of 6 mm, a fiber length of 50.8 mm, and a thickness of 0.055 mm were set. Then, the fiber bundles were dropped from a height of 0.5 m in the number of sheets thereof such that the fiber weight content would be 66% to form a sheet-shaped fiber bundle group having a thickness of 2.5 mm, the sheet-shaped fiber bundle group was pressurized in a state of being interposed with resin sheets formed from vinyl ester until the thickness thereof would be 2 mm so that the resin was impregnated therein, thereby obtaining a fiber-reinforced resin material with 25.4 mm long × 150 mm wide × 2 mm thick.

The proportions Q₁ to Q₅ of the fiber-reinforced resin material in this simulation were calculated. Incidentally, the range (A) at the time of calculating the proportions Q₁ to Q₅ was set to exclude a part away from both edges in the transverse direction by 10 mm and the fiber bundles as the target of the proportion Q₅ were set to fiber bundles with a fiber axis direction of -10° or more and 10° or less with respect to the total number of the fiber bundles in the range (B). Results of the simulation of a cured product obtained by curing the matrix resin in the fiber-reinforced resin material are also presented in Table 1. The tensile strength was 307 MPa, and the tensile elastic modulus was 47.1 GPa. In addition, the proportion Q₅ in a case where fiber bundles with a fiber axis direction of -5° or more and 5° or less with respect to the total number of fiber bundles in the range (B) were used as the target fiber bundles was 92.4%. Further, as a result of actual measurement of the physical property value of the cured product of the fiber-reinforced resin material obtained under the same condition as described above, the tensile strength was 342 MPa, and the tensile elastic modulus was 42.4 GPa.

### [Comparative Example 1]

The simulation was carried out in a similar manner to Example 1, except that the thickness of the fiber bundle was changed to 0.11 mm. The results are presented in Table 1. The tensile strength was 232 MPa, and the tensile elastic modulus was 41.7 GPa. In addition, the proportion Q₅ in a case where fiber bundles with a fiber axis direction of -5° or more and 5° or less with respect to the total number of the fiber bundles in the range (B) were used as the target fiber bundles was 97.7%. Further, as a result of actual measurement of the physical property value of the cured product of the fiber-reinforced resin material obtained under the same condition as described above, the tensile strength was 239 MPa, and the tensile elastic modulus was 44.0 GPa.

### [Comparative Example 2]

The simulation was carried out in a similar manner to Example 1, except that the thickness of the fiber bundle was changed to 0.15 mm, the width of the fiber bundle was changed to 14 mm, and the fiber length was changed to 25.4 mm. The results are presented in Table 1. The tensile strength was 146 MPa, and the tensile elastic modulus was 30.6 GPa. In addition, the proportion Q₅ in a case where fiber bundles with a fiber axis direction of -5° or more and 5° or less with respect to the total number of the fiber bundles in the range (B) were used as the target fiber bundles was 99.8%.

**[Table 1]**

| | | Example 1 | Comparative Example 1 | Comparative Example 2 |
|---|---|---|---|---|
| Fiber bundle | Width [mm] | 6 | 6 | 14 |
| | Fiber length [mm] | 50.8 | 50.8 | 25.4 |
| | Thickness [mm] | 0.055 | 0.11 | 0.15 |
| | Ratio (fiber length/width) | 8.5 | 8.5 | 1.8 |
| | Ratio (width/thickness) | 109.1 | 54.5 | 93.3 |
| Fiber content [%] | | 66 | 66 | 66 |
| Proportion Q₁ [%] | | 30.1 | 23.3 | 30.1 |
| Proportion Q₂ [%] | | 20.2 | 25.9 | 7.9 |
| Proportion Q₃ [%] | | 15.5 | 24.7 | 13.4 |
| Proportion Q₄ [%] | | 34.2 | 26.2 | 48.6 |
| Proportion Q₅ [%] | | 96.7 | 99.4 | 100 |
| Tensile elastic modulus [GPa] | | 47.1 | 41.7 | 30.6 |
| Tensile strength [MPa] | | 307 | 232 | 146 |

As presented in Table 1, the fiber-reinforced resin material of Example 1 in which the proportions Q₁ to Q₄ are all 15% or more and the proportion Q₅ is 97% or less had a higher tensile strength of a fiber-reinforced resin material molded body (cured product) to be obtained than the fiber-reinforced resin material of Comparative Example 1 in which the proportion Q₅ is more than 97%. In addition, in Example 1, there was a case where the proportions Q₁ to Q₄ are less than 15%, and in this case, the tensile strength and the tensile elastic modulus were higher than those of Comparative Example 2 in which the proportion Q₅ is more than 97%.

### INDUSTRIAL APPLICABILITY

By using the fiber-reinforced resin material of the invention, a fiber-reinforced resin material molded body having high mechanical properties such as tensile strength and tensile elastic modulus is obtained.

According to the method for manufacturing a fiber-reinforced resin material of the invention, it is possible to manufacture a fiber-reinforced resin material by which a fiber-reinforced resin material molded body having high mechanical properties such as tensile strength and tensile elastic modulus is obtained.

### EXPLANATIONS OF LETTERS OR NUMERALS

- 1: FIBER-REINFORCED RESIN MATERIAL
- f: FIBER BUNDLE
- F: SHEET-SHAPED FIBER BUNDLE GROUP
- S: MATRIX RESIN COMPOSITION

## Claims

1. A fiber-reinforced resin material in which a matrix resin composition is impregnated in a sheet-shaped fiber bundle group formed from a plurality of fiber bundles,
wherein when a transverse direction is designated as 0° and a counterclockwise direction is designated as positive in a 25 mm long × 125 mm wide rectangular range (A) in a cross-section along a planar direction, the following proportions Q₁ to Q₄ are all 15% or more, and
when a planar direction is designated as 0° and a counterclockwise direction is designated as positive in a 2 mm long × 125 mm wide rectangular range (B) in a cross-section along a thickness direction, the following proportion Q₅ is 97% or less.
Proportion Q₁: a proportion of the number of fiber bundles with a fiber axis direction of more than -90° and -45° or less with respect to the total number of fiber bundles in the range (A)
Proportion Q₂: a proportion of the number of fiber bundles with a fiber axis direction of more than -45° and 0° or less with respect to the total number of fiber bundles in the range (A)
Proportion Q₃: a proportion of the number of fiber bundles with a fiber axis direction of more than 0° and 45° or less with respect to the total number of fiber bundles in the range (A)
Proportion Q₄: a proportion of the number of fiber bundles with a fiber axis direction of more than 45° and 90° or less with respect to the total number of fiber bundles in the range (A)
Proportion Q₅: a proportion of the number of fiber bundles with a fiber axis direction of -10° or more and 10° or less with respect to the total number of fiber bundles in the range (B)

2. The fiber-reinforced resin material according to claim 1, wherein the proportion Q₅ is a proportion of the number of fiber bundles with a fiber axis direction of -5° or more and 5° or less with respect to the total number of fiber bundles in the range (B).

3. The fiber-reinforced resin material according to claim 1 or 2, wherein the proportion Q₅ is 95% or less.

4. The fiber-reinforced resin material according to any one of claims 1 to 3, wherein a ratio L2/L1 of an average fiber length L2 to an average width L1 of the fiber bundles is 5 to 20.

5. The fiber-reinforced resin material according to any one of claims 1 to 4, wherein the number of the fiber bundles laminated per unit thickness is 8 or more.

6. The fiber-reinforced resin material according to any one of claims 1 to 5, wherein a fiber mass content is 60% by mass or more.

7. A method for manufacturing a fiber-reinforced resin material, the method comprising an impregnating step of sandwiching a sheet-shaped fiber bundle group formed from a plurality of fiber bundles with a pair of resin sheets formed from a matrix resin composition and impregnating the matrix resin composition in the sheet-shaped fiber bundle group while pressurizing the sheet-shaped fiber bundle group and the pair of resin sheets from both surface sides to obtain a fiber-reinforced resin material,
wherein the fiber bundles have an average width L'1 of 2 to 12 mm, an average fiber length L'2 of 20 to 100 mm, an average thickness L'3 of 0.01 to 0.1 mm, and a ratio L'2/L'1 of 5 to 20.
